(19) **Europäisches Patentamt / European Patent Office / Office européen des brevets**

(11) **EP 4 437 299 B1**

(12) **FASCICULE DE BREVET EUROPEEN**

(45) Date de publication et mention de la délivrance du brevet:
**14.01.2026 Bulletin 2026/03**

(21) Numéro de dépôt: **22818454.5**

(22) Date de dépôt: **22.11.2022**

(51) Classification Internationale des Brevets (IPC):
*F41G 3/14* (2006.01)    *F41G 3/02* (2006.01)
*F41G 3/16* (2006.01)    *F41G 7/22* (2006.01)
*G01S 3/784* (2006.01)    *G01S 7/48* (2006.01)

(52) Classification Coopérative des Brevets (CPC):
**F41G 3/145; F41G 3/02; F41G 3/165; F41G 7/226; F41G 7/2293; G01S 3/784; G01S 7/4804**

(86) Numéro de dépôt international:
**PCT/EP2022/082883**

(87) Numéro de publication internationale:
**WO 2023/094409 (01.06.2023 Gazette 2023/22)**

(54) **PROCÉDÉ ET DISPOSITIF DE VISUALISATION D'IMPACTS D'IMPULSIONS LASER SUR UNE CIBLE**

VERFAHREN UND VORRICHTUNG ZUR VISUALISIERUNG VON LASERIMPULSAUFSCHLÄGEN AUF EIN ZIEL

METHOD AND DEVICE FOR VISUALISING IMPACTS OF LASER PULSES ON A TARGET

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.11.2021 FR 2112484**

(43) Date de publication de la demande:
**02.10.2024 Bulletin 2024/40**

(73) Titulaire: **Safran Electronics & Defense**
**75015 Paris (FR)**

(72) Inventeur: **MARIE, Vincent**
**77550 MOISSY-CRAMAYEL (FR)**

(74) Mandataire: **Cabinet Boettcher**
**5, rue de Vienne**
**75008 Paris (FR)**

(56) Documents cités:
**WO-A1-2021/198631**    **FR-A1- 2 740 558**
**FR-A1- 2 940 463**    **US-A1- 2021 247 231**

## Description

La présente invention concerne le domaine du guidage, par exemple le guidage de munitions aériennes telles que des missiles ou des roquettes.

### ARRIERE PLAN DE L'INVENTION

Les munitions guidées comprennent généralement des gouvernes dont l'orientation permet de diriger la munition et un système de guidage relié aux gouvernes pour orienter celles-ci de manière à diriger la munition vers la cible. L'un des systèmes de guidage couramment utilisés est l'autodirecteur (ou « tête chercheuse » dans le langage courant) qui comprend un capteur agencé pour détecter un signal provenant de la cible et un circuit de traitement qui interprète les données de détection provenant du capteur en commandes pour les gouvernes.

Il existe des munitions qui sont équipées d'autodirecteur à laser semi-actif permettant de détecter la réflexion sur la cible d'impulsions laser projetées par un désignateur laser. Le désignateur laser peut être embarqué sur le véhicule ayant tiré la munition ou sur un autre véhicule ; il peut également être manipulé par un soldat débarqué se trouvant à quelque distance de la cible. En outre, un observateur peut être amené à observer la cible visée afin de confirmer que c'est bien la bonne cible. Les caractéristiques principales du désignateur laser sont :

-   la longueur d'onde d'émission (typiquement 1064 nm),
-   l'énergie émise par impulsion (typiquement quelques dizaines à quelques centaines de millijoules),
-   la durée d'une impulsion (typiquement quelques dizaines de nanosecondes),
-   la période de répétition des impulsions ou PRI (typiquement de 50 à 120 ms).

La réussite du guidage repose en grande partie sur la capacité à visualiser l'impact des impulsions laser sur la cible (on parle couramment de « tache laser » pour désigner cet impact) et à mesurer la PRI car cette dernière est une caractéristique qui permet de discriminer l'origine des différentes taches laser qui peuvent être simultanément présentes sur un champ de bataille.

Les capteurs CMOS à arséniure d'indium-gallium (InGaAs) sont utilisés pour visualiser cette tache sans toutefois permettre de déterminer la PRI. Pour détecter la PRI, il faut adjoindre, au capteur CMOS, un détecteur de type « laser spot tracker » à base de photodiodes à avalanche, ce qui augmente la complexité, l'encombrement, la consommation et le coût du dispositif de visualisation.

Il est connu des documents WO-A-2021/198631 et US-A-2021/247231 un procédé de détection d'impacts d'impulsions laser dans une image permettant de déterminer la période de répétition des impulsions en utilisant un circuit de lecture de type « rolling shutter ». La détermination de la période de répétition des impulsions est obtenue par une transformée de Fourier.

### OBJET DE L'INVENTION

L'invention a notamment pour but de permettre la visualisation d'impacts d'impulsion laser et d'estimer la PRI de manière simple, fiable et relativement peu coûteuse.

### RESUME DE L'INVENTION

A cet effet, on prévoit, selon l'invention un procédé de visualisation d'impacts d'impulsions laser émises par un désignateur laser, selon une période de répétition prédéterminée, sur une cible présente dans une scène, au moyen d'un dispositif comprenant : un capteur optronique de type CMOS sur silicium ayant un nombre prédéterminé de lignes, un circuit de lecture de type « Rolling Shutter », et un circuit électronique de traitement d'image.

Le procédé comprend les étapes de :

-   exposer chaque ligne du capteur pendant un temps d'exposition ($t_{EXPOSITION}$) et lire chaque ligne pendant un temps de lecture ($t_{READOUT}$) tels que le temps d'exposition est supérieur ou égal au temps de lecture de chaque ligne mais inférieur ou égal au produit du temps de lecture de chaque ligne et du nombre de lignes,
-   détecter dans chaque trame image fournie par le circuit de lecture une transition entre des lignes du capteur exposées à un signal résultant d'une réflexion d'une des impulsions laser et des lignes non exposées audit signal,
-   estimer à partir de cette transition un instant de datation d'impulsion dans au moins deux images et en déduire la période de répétition des impulsions.

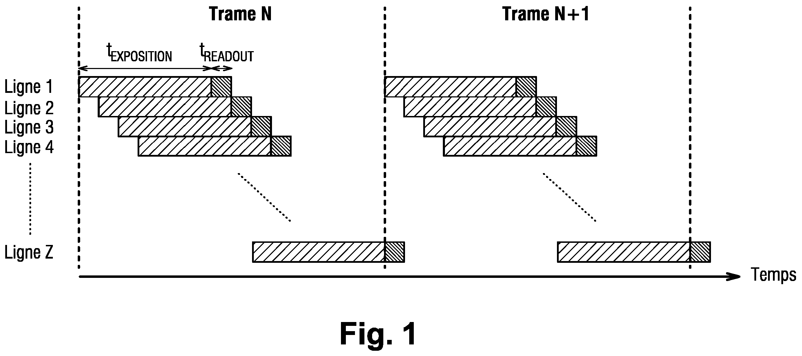

Ainsi, l'invention exploite un inconvénient des capteurs CMOS associés à un circuit de lecture « rolling shutter », à savoir l'existence d'un déphasage de lecture d'une ligne à l'autre (inconvénient qui se traduit par des artéfacts et des déformations géométriques sur certaines images de scène en mouvement). En effet, avec un tel agencement, les détecteurs élémentaires (couramment dénommés « pixels » ou « photosites ») sont dépourvus de mémoire : l'exposition du capteur (temps d'exposition $t_{EXPOSITION}$) est effectuée séquentiellement, ligne de détecteurs élémentaires après ligne de détecteurs élémentaires, et chaque ligne est lue (temps de lecture $t_{READOUT}$) dès la fin de son exposition, comme cela est illustré sur la figure 1. C'est grâce à ce déphasage temporel (égal au temps de lecture) que dans les images vont exister une zone exposée à la réflexion des impulsions et une zone non exposée, du fait que, le flux lumineux lié à la réflexion d'une impulsion laser étant bref, il sera interrompu avant que toutes les lignes n'aient été exposées. La détection de la transition est donc relativement aisée et, connaissant le déphasage temporel entre les lignes, il est possible d'estimer la PRI. L'invention concerne également un dispositif pour la mise en œuvre de ce procédé.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

La figure 1 est un schéma temporel illustrant le mode de fonctionnement d'un circuit de lecture « rolling shutter » avec une représentation du temps d'exposition et du temps de lecture de chaque ligne, mettant en évidence le décalage temporel existant pour l'exposition d'une ligne à la suivante ;
La figure 2 est un schéma temporel, analogue à celui de la figure 1, illustrant la détection d'une impulsion laser ;
La figure 3 est une vue de l'image correspondant à cette détection avec la représentation des lignes du capteur ;
La figure 4 est un schéma temporel, analogue à celui de la figure 1, illustrant une autre détection d'une impulsion laser ;
La figure 5 est une vue de l'image correspondant à cette autre détection avec la représentation des lignes du capteur ;
La figure 6 est une représentation temporelle de la succession des trames images et des instants de détection des impulsions laser ;
La figure 7 est une illustration de la manière dont est détectée la zone d'impact des impulsions dans la scène ;
La figure 8 est un logigramme d'un dispositif de visualisation selon l'invention.

DESCRIPTION DETAILLEE DE L'INVENTION

L'invention concerne un procédé et un dispositif pour la visualisation d'une scène et la visualisation d'impacts d'impulsions laser émises par un désignateur laser sur une cible présente dans la scène. Les caractéristiques principales des impulsions émises par le désignateur laser sont :

-    la longueur d'onde d'émission (typiquement 1064 nm),
-    l'énergie émise par impulsion (typiquement quelques dizaines à quelques centaines de millijoules),
-    la durée d'une impulsion (typiquement quelques dizaines de nanosecondes),
-    la période de répétition des impulsions ou PRI (typiquement de 50 à 120 ms).

Dans le mode de réalisation décrit, les données qui précèdent sont connues par l'utilisateur du dispositif : l'utilisateur est par exemple face à une scène dans laquelle se trouvent plusieurs cibles sur chacune desquelles est dirigé un désignateur laser projetant des impulsions lasers formant une tache laser et l'utilisateur met en œuvre le dispositif et le procédé de l'invention pour visualiser la tache laser mais aussi déterminer la période de répétition des impulsions aux fins de s'assurer que la tache laser visualisée correspond bien à celle que l'utilisateur recherche. On notera que l'invention trouve son intérêt même pour un utilisateur se trouvant en présence d'une seule cible illuminée par un seul désignateur. Le dispositif de l'invention peut ainsi être utilisé à la fois par l'opérateur du désignateur laser, un observateur distinct, mais aussi dans une munition guidée par ladite tache laser.

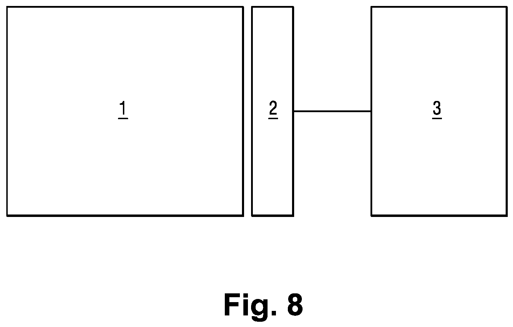

En référence à la figure 8, le dispositif de l'invention comprend :

-    un capteur optronique 1,
-    un circuit électronique de lecture 2, et
-    un circuit électronique de traitement d'image 3.

De manière connue en elle-même, le capteur optronique 1 est de type CMOS sur silicium ayant une couche épitaxiale d'épaisseur suffisante pour que le capteur optronique soit sensible à la longueur d'onde de 1064 nm. Le capteur optronique 1 comprend une matrice de détecteurs élémentaires (ou pixels ou photosites), à savoir des photodiodes, agencés en lignes et en colonnes, le capteur optronique 1 ayant un nombre prédéterminé de lignes Z ici égal à cinq pour simplifier la description et les figures. Classiquement, chaque détecteur élémentaire frappé par un photon lors de la phase d'exposition est susceptible de produire une charge qui sera récupérée par le circuit de lecture 2 lors de la phase de lecture.

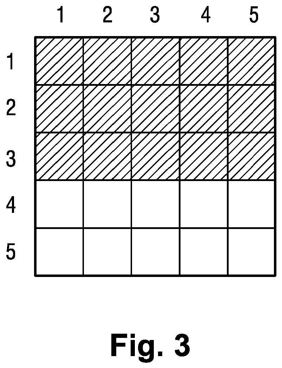

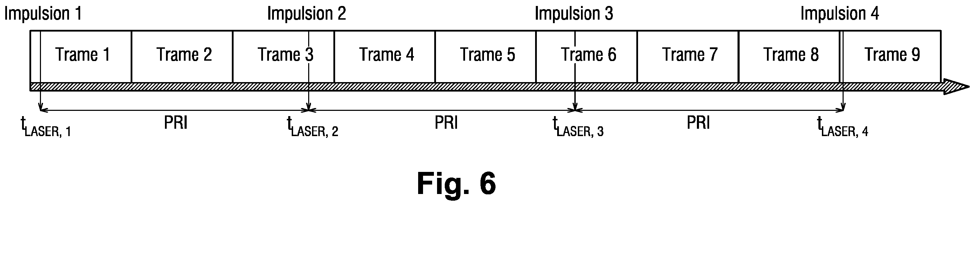

Le circuit de lecture 2, connu en lui-même, est de type « Rolling Shutter » et permet de récupérer les charges des détecteurs élémentaires ligne par ligne. Plus précisément, le circuit de lecture 2 est pilotable pour exposer chaque ligne pendant un temps d'exposition $t_{EXPOSITION}$ et lire chaque ligne pendant un temps de lecture $t_{READOUT}$ (voir sur les figures 1, 2 et 4). Le temps d'exposition $t_{EXPOSITION}$ est ajustable par le circuit de lecture 2 tandis que le temps de lecture $t_{READOUT}$ est fixe. Le circuit de lecture 2 fournit des trames image (visibles sur la figure 6), chaque trame image correspondant à une image telle que celles représentées sur les figures 3, 5 et 7.

Le circuit de traitement 3 comprend au moins un processeur et une mémoire contenant au moins un programme exécutable par le processeur pour mettre en œuvre le procédé de l'invention.

Le procédé selon l'invention comprend les étapes de :

- diriger le capteur optronique 1 vers la scène contenant la cible sur laquelle le désignateur projette les impulsions laser ;
- exposer chaque ligne du capteur pendant le temps d'exposition $t_{EXPOSITION}$ et lire chaque ligne pendant le temps de lecture $t_{READOUT}$ tels que le temps d'exposition $t_{EXPOSITION}$ est supérieur ou égal au temps de lecture $t_{READOUT}$ de chaque ligne mais inférieur ou égal au produit du temps de lecture $t_{READOUT}$ de chaque ligne et du nombre Z de lignes pour obtenir un flux vidéo de la scène et plus précisément de la cible avec la tache laser ;
- détecter dans chaque trame image fournie par le circuit de lecture 2 une transition entre des lignes du capteur optronique 1 exposées à un signal résultant de la réflexion d'une des impulsions laser et des lignes non exposées audit signal,
- estimer à partir de cette transition un instant d'impulsion dans au moins deux images et en déduire la période de répétition des impulsions.

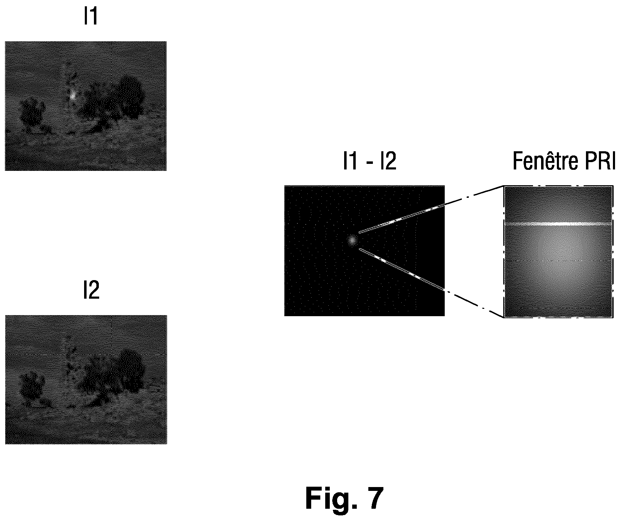

Plus précisément, dans le mode de réalisation préféré, le circuit de traitement d'image 3 est programmé pour détecter et isoler la tache laser dans les images. Pour faciliter la détection de la tache laser dans l'image, le circuit de lecture 2 peut être piloté lors de la prise de vue pour que chaque trame image du flux vidéo ait une durée $t_{TRAME}$ inférieure ou égale à une moitié de la période de répétition des impulsions que l'on souhaite détecter et que le temps d'exposition $t_{EXPOSITION}$ soit supérieur ou égal à la moitié de la durée $t_{TRAME}$. La première condition permet de disposer d'au moins une image sur laquelle n'apparaît pas la tache laser (cette image étant donc représentative d'un fond de scène ambiant) et la deuxième condition maximise la probabilité d'intégration de la tache laser. On peut dès lors isoler la tache laser sur les images et soustraire de chaque trame image le fond de scène ambiant de manière à n'avoir plus que la tache laser dans l'image. Comme illustré sur la figure 7, une image I2 représentant le fond de scène est soustrait aux images I1 d'un flux vidéo représentant la scène avec la tache laser. Les images I1-I2 du flux vidéo résultant comprennent alors essentiellement la tache laser.

On remarque que la tache laser est décentrée et n'occupe pas tout le champ des images. Or, pour que l'estimation de la PRI soit robuste, il est souhaitable que la tache laser occupe toute l'image (autrement dit toute la zone imagée par le capteur optronique 1). Le circuit de traitement d'image 3 est programmé pour définir une fenêtre (ou « Region Of Interest ») autour de la tache laser pour obtenir l'image « fenêtre PRI ».

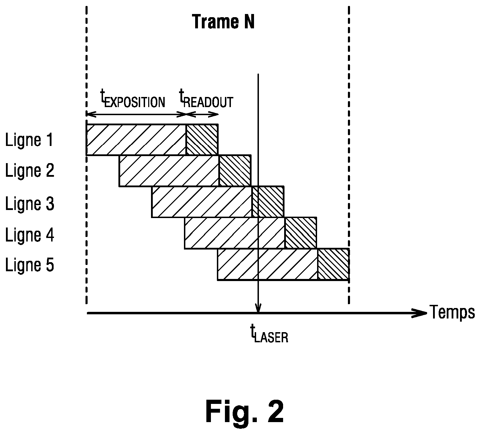

On note qu'un dépointage du désignateur (résultant par exemple de turbulences atmosphériques, d'un défaut de stabilité du désignateur ou autre) pourrait faire sortir la tâche laser de la fenêtre définie lors de l'opération de fenêtrage. Si on veut rendre la mesure de PRI plus robuste au dépointage, on peut réaliser également une défocalisation pour limiter l'influence d'un tel dépointage lors de l'opération de fenêtrage, une telle défocalisation faisant grossir la tache laser dans l'image. La défocalisation à réaliser est proportionnelle au dépointage rencontré. Cependant, une telle défocalisation dégrade le rapport signal/bruit et donc diminue la portée maximale de mesure, ce qui est à prendre en compte si on choisit de la réaliser. Le circuit de traitement d'image 3 est alors programmé pour analyser chaque image du flux vidéo. Deux cas de figures sont possibles quant à la détection de l'impulsion laser par le capteur optronique 1 lorsque le temps d'exposition $t_{EXPOSITION}$ est supérieur ou égal au temps de lecture $t_{READOUT}$ de chaque ligne mais inférieur ou égal au produit du temps de lecture $t_{READOUT}$ de chaque ligne et du nombre Z de lignes. On a représenté à la figure 2 l'instant d'apparition $t_{laser}$ d'une tache laser par rapport au temps d'exposition $t_{EXPOSI-TION}$ et au temps de lecture $t_{READOUT}$ de chaque ligne du capteur optronique 1. On voit que l'instant d'apparition intervient après le temps d'exposition des lignes 1 à 3 et pendant le temps d'exposition des lignes 4 et 5. L'image résultante, extraite du flux vidéo et visible sur la figure 3, comprend donc une zone non exposée à l'impulsion (occupant les trois cinquièmes supérieurs de l'image) et une zone exposée à l'impulsion (occupant les deux cinquièmes inférieurs de l'image).

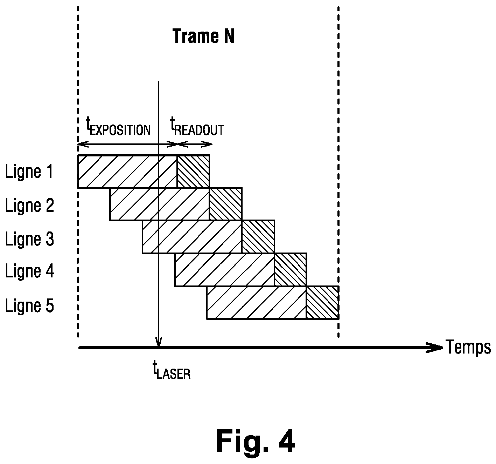

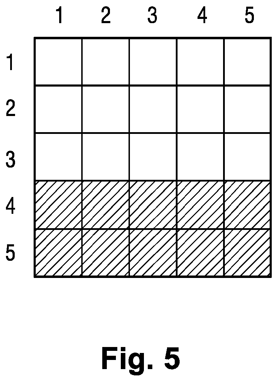

On a représenté à la figure 4 l'instant d'apparition $t_{laser}$ d'une tache laser par rapport au temps d'exposition $t_{EXPOSI-TION}$ et au temps de lecture $t_{READOUT}$ de chaque ligne du capteur optronique 1 selon un enchainement temporel différent de celui de la figure 2. On voit que l'instant d'apparition intervient pendant le temps d'exposition des lignes 1 à 3 et avant le temps d'exposition des lignes 4 et 5. L'image résultante, extraite du flux vidéo et visible sur la figure 5, comprend donc une zone exposée à l'impulsion (occupant les trois cinquièmes supérieurs de l'image) et une zone non exposée à l'impulsion (occupant les deux cinquièmes inférieurs de l'image).

La transition entre les deux zones est donc un indicateur précis, au temps de lecture près, de l'impulsion laser (d'autant plus précis que la durée de l'impulsion laser est petite - ratio ici compris entre 100 et 1000 - par rapport au produit du nombre de lignes du capteur et de la somme des temps d'exposition et de lecture de chaque ligne). La détection de la transition est ici effectuée en comparant la valeur de chaque pixel de chaque ligne de l'image à un seuil ajusté selon un niveau de bruit du capteur optronique 1. De préférence, chaque trame image du flux vidéo a une durée inférieure ou égale à une moitié de la période de répétition des impulsions que l'on souhaite détecter afin de faciliter encore la détection de la transition.

Il est dès lors possible d'estimer l'instant $t_{laser}$ dans une image n à partir des équations suivantes :

- pour le cas correspondant aux figures 2 et 3

$$t_{0,n} + t_{EXPOSITION} + (L_{1,n} - 1) * t_{READOUT} \leq t_{laser,n}$$

$$t_{laser,n} \leq t_{0,n} + t_{EXPOSITION} + L_{1,n} * t_{READOUT}$$

- pour le cas correspondant aux figures 4 et 5

$$t_{0,n} + (L_{1,n}-1) \times t_{READOUT} \leq t_{laser,n} \leq t_{0,n} + L_{1,n} \times t_{READOUT}$$

avec, dans les deux cas,

$t_{0,n}$ l'instant initial de la trame image n,
$L_{1,n}$ l'indice de la dernière ligne du capteur précédant la transition détectée dans la trame image n,
$t_{laser,n}$ l'instant de datation de l'impulsion laser dans la trame image n,
Cette estimation est précise au temps de lecture près.

De plus, dans le flux vidéo, on dispose de plusieurs trames images et on va chercher à détecter une transition dans chacune des images correspondantes pour pouvoir calculer la période de répétition des impulsions.

On voit ainsi sur la figure 6 que l'impulsion 1 a été émise pendant la capture de la trame 1, l'impulsion 2 a été émise pendant la capture de la trame 3, l'impulsion 3 a été émise pendant la capture de la trame 6, et l'impulsion 4 a été émise pendant la capture de la trame 9.

La détection de transition dans les trames images 1 à 9 va permettre de déterminer l'instant d'impulsion $t_{laser}$ dans chacune des trames 1, 3, 6 et 9 et permettre de calculer la période de répétition des impulsions en utilisant la formule suivante :

$$PRI = (t_{laser,n+m} - t_{laser,n})/m$$

avec

$t_{laser,n}$ l'instant de datation de l'impulsion laser dans la trame n,
$t_{laser,n+m}$ l'instant de datation de l'impulsion laser dans la trame n+m,
m le nombre de trames séparant les trames n et n+m.

Dans l'exemple de la figure 6, on peut choisir les trames 1 et 3, 1 et 6, 1 et 9, 3 et 6, 3 et 9, et/ou 6 et 9 pour calculer la PRI.

Bien entendu, l'invention n'est pas limitée au mode de réalisation décrit mais englobe toute variante entrant dans le champ de l'invention telle que définie par les revendications.

En particulier, le dispositif peut avoir une structure différente de celle décrite.

Le nombre et l'agencement des circuits et la répartition des fonctions entre les circuits peuvent être modifiés.

En outre, il est possible de ne pas déterminer la position de la tâche laser par détection mais par une connaissance a priori de la zone visée dans l'image et de l'étendue angulaire de la tâche laser.

Tout ou partie des caractéristiques suivantes peut être omise :

- la détection de transition effectuée en utilisant un seuil ajusté selon un niveau de bruit du capteur ;

- la durée des trames image inférieure ou égale à une moitié de la période de répétition des impulsions ;
- la soustraction du fond de scène ambiant de manière à isoler ledit signal dans tout ou partie des trames image ;
- le recentrement de la trame image autour des impacts, préalablement à la détection de la transition ;
- la défocalisation pour faciliter le recentrement de la trame image autour des impacts.

Ainsi, l'opération de défocalisation n'est pas nécessaire si le risque et/ou l'amplitude de dépointage sont faibles. Ainsi, il n'est pas nécessaire de faire un fenêtrage si on choisit dès la prise de vue de serrer le champ du capteur sur la tache laser (par exemple au moyen d'un groupement de lentilles à distance focale réglable).

Le ratio entre la durée de l'impulsion laser et le produit du nombre de lignes du capteur et de la somme des temps d'exposition et de lecture de chaque ligne peut être plus petit ou plus grand que celui mentionné, selon la précision recherchée.

On peut ne s'intéresser qu'à une partie des images, par exemple celle présentant la configuration de la figure 3 ou celle de la figure 5.

**Revendications**

1. Procédé de visualisation d'impacts d'impulsions laser émises par un désignateur laser, selon une période de répétition prédéterminée (PRI), sur une cible présente dans une scène, au moyen d'un dispositif comprenant : un capteur optronique (1) de type CMOS sur silicium ayant un nombre prédéterminé de lignes (Z), un circuit de lecture (2) de type « Rolling Shutter », et un circuit électronique de traitement d'image (3) ; le procédé comprenant les étapes de

   - exposer chaque ligne du capteur pendant un temps d'exposition ($t_{EXPOSITION}$) et lire chaque ligne pendant un temps de lecture ($t_{READOUT}$) tels que le temps d'exposition est supérieur ou égal au temps de lecture de chaque ligne mais inférieur ou égal au produit du temps de lecture de chaque ligne et du nombre de lignes,
   - détecter dans chaque trame image fournie par le circuit de lecture une transition entre des lignes du capteur exposées à un signal résultant d'une réflexion d'une des impulsions laser et des lignes non exposées audit signal,
   - estimer à partir de cette transition un instant de datation d'impulsion dans au moins deux images et en déduire la période de répétition des impulsions.

2. Procédé selon la revendication 1, dans lequel la détection de transition est effectuée en utilisant un seuil ajusté selon un niveau de bruit du capteur.

3. Procédé selon la revendication 2, dans lequel chaque trame image a une durée inférieure ou égale à une moitié de la période de répétition des impulsions.

4. Procédé selon la revendication 3, dans lequel le circuit de traitement d'image est agencé pour soustraire de chaque trame image un fond de scène ambiant de manière à isoler ledit signal.

5. Procédé selon l'une quelconque des revendications précédentes, dans lequel l'instant de datation d'impulsion est estimé à partir des formules suivantes :

$$t_{0,n} + t_{EXPOSITION} + (L_{1,n} - 1)* t_{READOUT} \leq t_{laser,n}$$

$$t_{laser,n} \leq t_{0,n} + t_{EXPOSITION} + L_{1,n}* t_{READOUT}$$

$$t_{0,n} + (L_{1,n}-1) \times t_{READOUT} \leq t_{laser,n} \leq t_{0,n} + L_{1,n} \times t_{READOUT}$$

avec

   $t_{0,n}$ l'instant initial de la trame image n,
   $L_{1,n}$ l'indice de la dernière ligne du capteur précédant la transition détectée dans la trame image n,
   $t_{laser,n}$ l'instant de datation de l'impulsion laser dans la trame n.

6. Procédé selon la revendication 5, dans lequel la période de répétition des impulsions (PRI) est estimée à partir de l'équation suivante :

$$PRI = (t_{laser,n+m} - t_{laser,n})/m$$

avec

t_{laser,n} l'instant de datation de l'impulsion laser dans la trame n,
$t_{laser,n+m}$ l'instant de datation de l'impulsion laser dans la trame n+m,
m le nombre de trames séparant les trames n et n+m.

7. Procédé selon l'une quelconque des revendications précédentes, comprenant l'étape de recentrer la trame image autour des impacts, préalablement à la détection de la transition.

8. Procédé selon la revendication 7, comprenant l'étape de réaliser une défocalisation pour faciliter le recentrement de la trame image autour des impacts.

9. Dispositif de visualisation d'une scène et d'impacts d'impulsions laser émises par un désignateur laser, selon une période de répétition prédéterminée (PRI), sur une cible présente dans la scène, comprenant : un capteur optronique (1) de type CMOS ayant un nombre prédéterminé de lignes (Z), un circuit de lecture (2) de type « Rolling Shutter » pilotable pour exposer chaque ligne pendant un temps d'exposition ($t_{EXPOSITION}$) et lire chaque ligne pendant un temps de lecture ($t_{READOUT}$) tels que le temps d'exposition est supérieur ou égal au temps de lecture de chaque ligne mais inférieur ou égal au produit du temps de lecture de chaque ligne et du nombre de lignes, et un circuit électronique de traitement d'image (3) agencé pour mettre en œuvre le procédé selon l'une quelconque des revendications précédentes.

**Patentansprüche**

1. Verfahren zur Visualisierung von Aufschlägen von Laserpulsen, die von einem Lasermarkierer in einem vorbestimmten Wiederholintervall (PRI) auf ein in einer Szene vorhandenes Ziel mithilfe einer Vorrichtung ausgesendet werden, welche einen CMOS-Optroniksensor (1) auf Siliziumbasis mit einer vorbestimmten Anzahl von Zeilen (Z), eine Rolling-Shutter-Ausleseschaltung (2) und eine elektronische Bildverarbeitungsschaltung (3) umfasst, wobei das Verfahren die Schritte umfasst, dass

   - jede Zeile des Sensors während einer Belichtungszeit ($t_{EXPOSITION}$) DERART BELICHTET WIRD UND JEDE ZEILE WÄHREND EINER AUSLESEZEIT ($T_{READOUT}$) derart ausgelesen wird, dass die Belichtungszeit größer oder gleich der Auslesezeit jeder Zeile, aber kleiner oder gleich dem Produkt aus der Auslesezeit jeder Zeile und der Zeilenanzahl ist,
   - in jedem von der Ausleseschaltung bereitgestellten Bildframe ein Übergang erkannt wird zwischen Zeilen des Sensors, die einem Signal ausgesetzt wurden, das aus einer Reflexion von einem der Laserpulse resultiert, und Zeilen, die dem betreffenden Signal nicht ausgesetzt wurden,
   - aus diesem Übergang in zumindest zwei Bildern ein Puls-Datierungszeitpunkt geschätzt wird und daraus das Pulswiederholintervall abgeleitet wird.

2. Verfahren nach Anspruch 1, wobei die Übergangsdetektion unter Anwendung eines an einen Rauschpegel des Sensors angepassten Schwellenwerts erfolgt.

3. Verfahren nach Anspruch 2, wobei jedes Bildframe eine Zeitdauer aufweist, die kleiner oder gleich der Hälfte des Pulswiederholintervalls ist.

4. Verfahren nach Anspruch 3, wobei die Bildverarbeitungsschaltung dafür ausgelegt ist, von jedem Bildframe einen Szenenumgebungshintergrund zu subtrahieren, um das betreffende Signal zu isolieren.

5. Verfahren nach einem der vorhergehenden Ansprüche, wobei der Puls-Datierungszeitpunkt anhand der folgenden Formeln geschätzt wird:

$$t_{0,n} + t_{EXPOSITION} + (L_{1,n} - 1) * t_{READOUT} \leq t_{laser,n}$$

$$t_{laser,n} \leq t_{0,n} + t_{EXPOSITION} + L_{1,n} * t_{READOUT}$$

$$t_{0,n} + (L_{1,n}-l) \times t_{READOUT} \leq t_{laser,n} \leq t_{0,n} + L_{1,n} \times t_{READOUT}$$

mit

$t_{0,n}$ als dem Anfangszeitpunkt des Bildframes n,
$L_{1,n}$ als dem Zeilenindex der letzten Zeile des Sensors vor dem in dem Bildframe n erkannten Übergang,
$t_{laser,n}$ als dem Datierungszeitpunkt des Laserpulses in dem Frame n.

6. Verfahren nach Anspruch 5, wobei das Pulswiederholintervall (PRI) anhand der folgenden Formel geschätzt wird:

$$PRI = (t_{laser,n+m} - t_{laser,n})/m$$

mit

$t_{laser,n}$ als dem Datierungszeitpunkt des Laserpulses in dem Frame n,
$t_{laser,n+m}$ als dem Datierungszeitpunkt des Laserpulses in dem Frame n+m,
m als der Anzahl der Frames, die zwischen den Frames n und n+m liegen.

7. Verfahren nach einem der vorhergehenden Ansprüche, welches den Schritt umfasst, dass vor der Übergangsdetektion das Bildframe um die Aufschläge herum neu zentriert wird.

8. Verfahren nach Anspruch 7, welches den Schritt umfasst, dass eine Defokussierung durchgeführt wird, um die Neuzentrierung des Bildframes um die Aufschläge herum zu erleichtern.

9. Vorrichtung zur Visualisierung einer Szene und von Aufschlägen von Laserpulsen, die von einem Lasermarkierer in einem vorbestimmten Wiederholintervall (PRI) auf ein in der Szene vorhandenes Ziel ausgesendet werden, wobei die Vorrichtung umfasst: einen CMOS-Optroniksensor (1) mit einer vorbestimmten Anzahl von Zeilen (Z), eine Rolling-Shutter-Ausleseschaltung (2), die derart angesteuert werden kann, dass jede Zeile während einer Belichtungszeit ($t_{EXPOSITION}$) derart belichtet wird und jede Zeile während einer Auslesezeit ($t_{READOUT}$) derart ausgelesen wird, dass die Belichtungszeit größer oder gleich der Auslesezeit jeder Zeile, aber kleiner oder gleich dem Produkt aus der Auslesezeit jeder Zeile und der Zeilenanzahl ist, sowie eine elektronische Bildverarbeitungsschaltung (3), die dafür ausgelegt ist, das Verfahren nach einem der vorhergehenden Ansprüche auszuführen.

**Claims**

1. Method for visualising impacts of laser pulses emitted by a laser designator, according to a predetermined repetition interval (PRI), onto a target present in a scene, by means of a device comprising: a silicone-based CMOS-type optronic sensor (1) having a predetermined number of rows (Z), a rolling shutter-type reading circuit (2), and an electronic image processing circuit (3); the method comprising the steps of:

- exposing each row of the sensor for an exposure time ($t_{EXPOSURE}$) and reading each row for a reading time ($t_{READOUT}$) so that the exposure time is no less than the reading time of each row, but no more than the product of the reading time of each row and the number of rows,
- detecting, in each image frame provided by the readout circuit, a transition between the rows of the sensor exposed to a signal resulting from a reflection of one of the laser pulses and of the rows not exposed to said signal,
- estimating, from this transition, a pulse dating instant in at least two images and in order to infer the pulse repetition interval.

2. Method according to claim 1, wherein the detection of transition is performed by using an adjusted threshold according to a noise level of the sensor.

3. Method according to claim 2, wherein each image frame has a duration less than or equal to half of the pulse repetition interval.

4. Method according to claim 3, wherein the image processing circuit is arranged to remove an ambient backdrop from each image frame, so as to isolate said signal.

5. Method according to any one of the preceding claims, wherein the pulse dating instant is estimated from the following formulas:

$$t_{0,n} + t_{EXPOSURE} + (L_{1,n} - 1) * t_{READOUT} \leq t_{laser,n}$$

$$t_{laser,n} \leq t_{0,n} + t_{EXPOSURE} + L_{1,n} * t_{READOUT}$$

$$t_{0,n} + (L_{1,n} - 1) \times t_{READOUT} \leq t_{laser,n} \leq t_{0,n} + L_{1,n} \times t_{READOUT}$$

with

$t_{0,n}$, the initial instant of the image frame n,
$L_{1,n}$, the index of the last row of the sensor preceding the transition detected in the image frame n,
$t_{laser,n}$, the dating instant of the laser pulse in the frame n.

6. Method according to claim 5, wherein the pulse repetition interval (PRI) is estimated from the following equation:

$$PRI = (t_{laser,n+m} - t_{laser,n}) / m$$

with

$t_{laser,n}$, the dating instant of the laser pulse in the frame n,
$t_{laser,n+m}$, the dating instant of the laser pulse in the frame n+m,
m, the number of frames separating the frames n and n+m.

7. Method according to any one of the preceding claims, comprising the step of recentring the image frame around the impacts, prior to the detection of the transition.

8. Method according to claim 7, comprising the step of performing a defocusing to facilitate the recentring of the image frame around the impacts.

9. Device for visualising a scene and impacts of laser pulses emitted by a laser designator, according to a predetermined repetition interval (PRI), onto a target present in the scene, comprising: a CMOS-type optronic sensor (1) having a predetermined number of rows (Z), a rolling shutter-type readout circuit (2) which can be controlled to expose each row for an exposure time ($t_{EXPOSURE}$) and reading each row for a reading time ($t_{READOUT}$), so that the exposure time is no less than the reading time of each row, but no more than the product of the reading time of each row and the number of rows, and an electronic image processing circuit (3) arranged to implement the method according to any one of the preceding claims.

**Fig. 1**

**Fig. 2**

**Fig. 3**

**Trame N**

$t_{EXPOSITION}$    $t_{READOUT}$

Ligne 1
Ligne 2
Ligne 3
Ligne 4
Ligne 5

Temps

$t_{LASER}$

# Fig. 4

**Fig. 5**

| Impulsion 1 | | Impulsion 2 | | | Impulsion 3 | | | Impulsion 4 |
|---|---|---|---|---|---|---|---|---|
| Trame 1 | Trame 2 | Trame 3 | Trame 4 | Trame 5 | Trame 6 | Trame 7 | Trame 8 | Trame 9 |

$t_{LASER, 1}$ — PRI — $t_{LASER, 2}$ — PRI — $t_{LASER, 3}$ — PRI — $t_{LASER, 4}$

**Fig. 6**

EP 4 437 299 B1

Fenêtre PRI

I1 - I2

I1

I2

Fig. 7

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2021198631 A

- US 2021247231 A